# EUROPÄISCHE PATENTSCHRIFT

(11) **EP 1 206 027 B1**
(45) Veröffentlichungstag und Bekanntmachung des Hinweises auf die Patenterteilung: **15.10.2008**
(21) Anmeldenummer: 01124737.6
(22) Anmeldetag: 17.10.2001
(51) Int. Cl.: H02K 41/02

(54) **Linearführung mit integriertem Linearmotor**
Linear guide with integral motor
Guide linéaire à moteur intégré

(30) Priorität: 11.11.2000 DE 10056031
(43) Veröffentlichungstag der Anmeldung: 15.05.2002
(73) Patentinhaber: Schaeffler KG, 91074 Herzogenaurach (DE)
(72) Erfinder: Lutz, Peter, 66877 Miesenbach (DE); Ruffing, Roland, 66450 Bexbach (DE)

(56) Entgegenhaltungen:
- DE-A- 19 837 212
- DE-A- 19 842 384
- US-A- 5 130 583
- US-A- 5 606 256
- PATENT ABSTRACTS OF JAPAN Bd. 2000, Nr. 07, 29. September 2000 (2000-09-29) -& JP 2000 102237 A (AMADA CO LTD), 7. April 2000 (2000-04-07)

## Beschreibung

Die Erfindung betrifft eine Linearführung mit einem als Profilträger ausgebildeten Führungsgehäuse, welches ein Strangpressprofilteil aus Aluminium ist, und einer darin befestigten Führungsschiene, an welcher ein Laufwagen über Wälzkörper längsverschieblich abgestützt ist, der sich durch eine Längsöffnung des Führungsgehäuses hindurch erstreckt und-sich teilweise außerhalb des Führungsgehäuses befindet, wobei die Linearführung innerhalb des Führungsgehäuses einen Antrieb für die Längsverschiebung des Laufwagens aufweist, der als Elektromotor mit einem in dem Führungsgehäuse angeordneten Motorteil und einem in dem Laufwagen angeordneten Motorteil ausgebildet ist, und die Längsöffnung durch ein Abdeckband aus nichtrostendem magnetischen Stahl verschlossen ist, für welches Permanentmagnetstreifen in Nuten des Führungsgehäuses eingebracht sind, wobei das in dem Laufwagen angeordnete Teil des Elektromotors ein Motorprimärteil ist, welches vom elektrischen Strom durchflossene Motorwicklungen beinhaltet, und das in dem Führungsgehäuse angeordnete Teil ein Motorsekundärteil ist, welches aus Magneten besteht.

Angetriebene Lineareinheiten werden im Maschinenbau z. B. für die Automatisierung benötigt. Mit ihnen können hohe Verfahrgeschwindigkeiten des Laufwagens, etwa 5 m/s, bei gleichzeitig hohen Positioniergenauigkeiten erreicht werden. Diese Einheiten müssen eine hohe Leistungsdichte aufweisen, d. h. es müssen möglichst hohe Kräfte in Verfahrrichtung bei niedrigstem Bauraum übertragbar sein. Die Leistungsdichte ist das Verhältnis von maximaler Vorschubkraft des Laufwagens zum Bauraum.

Aus der Druckschrift US-A-5606256 ist eine Linearführung bekannt, bei welcher ein Laufwagen an einer im Querschnitt U-förmigen Führungsschiene über Wälzkörper längsverschieblich abgestützt ist. Diese Führungsschiene ist nicht in einem zusätzlichen Führungsgehäuse angeordnet, sondern unmittelbar auf einem Grundkörper montiert. Die Linearführung enthält als Antrieb für die Längsverschiebung des Laufwagens einen Elektromotor, dessen Motorprimärteil mit elektrischen Leiterspulen über ein Joch im Innenraum der Führungsschiene angeordnet und dessen Motorsekundärteil mit Magneten über ein weiteres Joch an der Unterseite des Laufwagens montiert ist. Für das Spulenjoch des Motorprimärteils sind an der Innenseite der Führungsschiene Abstützvorsprünge ausgebildet. An der Unterseite des Spulenjochs befindet sich eine Gruppe elektronischer Komponenten. Oberhalb des Spulenjochs sind die Spulen mit einer dünnen Kunststoffplatte abgedeckt. Die Breite der Linearführung wird hier von der Dicke der beiden U-Schenkel der Führungsschiene und der Breite des für das Motorprimärteil mit seinen Einzelteilen erforderlichen Innenraums der Führungsschiene bestimmt.

In üblichen Konstruktionen wird ein verfahrbarer Tisch auf zwei Profilschienen mit jeweils mehreren Kugel- oder Rollenumlaufeinheiten geführt. Die Druckschrift WO 00/16468 zeigt eine Tischführung mit zwei Profilschienen, die als Fest-Los-Lageranordnung ausgeführt sein kann. Das Sekundärteil des als Antrieb dienenden Linearmotors befindet sich dort zwischen den beiden Profilschienen. Es ist mit seiner Anschlußkonstruktion verschraubt. Seine Trägerplatte ist deutlich breiter als die zum Motorbetrieb notwendige Permanentmagnetbreite. Zu dieser Breite addiert sich die Breite der Umlaufeinheiten. Die Systembreite ist also durch die Motorbreite und die Führungsbreite vorgegeben. Die Leistungsdichte kann nur durch Einbußen in Vorschubkraft und Tragfähigkeit der Führung erhöht werden.

### Zusammenfassung der Erfindung

Das Hauptziel bei der Neukonstruktion einer Führungsvorrichtung mit einem Linearmotor besteht somit in der Steigerung der Leistungsdichte, ohne die Tragfähigkeit der Laufwagenführung und die Steifigkeit des Aluminiumträgerprofils wesentlich zu beeinträchtigen. Dabei soll ein möglichst guter Schutz von Führung, Motor und eventuell verwendetem Meßsystem vor Umgebungseinflüssen wie Staub, Schmutz oder mechanischen Einwirkungen, erreicht werden.

Diese Aufgabe wird erfindungsgemäß dadurch gelöst, dass das Motorsekundärteil an der Führungsschiene unmittelbar befestigt ist. Auf diese Weise werden das Motorsekundärteil und die Führungsschiene zu einem Bauteil vereint, so dass die von der Motorbreite und der Führungsbreite bestimmte Systembreite gegenüber vorbekannten Anordnungen verringert ist.

Die Wälzkörper, über welche der Laufwagen an der Führungsschiene längsverschieblich abgestützt ist, können in mehreren endlosen Umläufen angeordnet sein, wobei jeder Umlauf eine tragende Wälzkörperreihe, eine rücklaufende Wälzkörperreihe und zwei diese Reihen miteinander verbindende Wälzkörperumlenkbögen enthält. Als Wälzkörper können Kugeln verwendet werden, welche in an dem Laufwagen befestigten Kugelumlaufschuhen geführt sind. Dabei können von den Umläufen jeweils die Kugeln der tragenden Reihen an den beiden in Längsrichtung verlaufenden Seitenflächen der Führungsschiene abgestützt sein.

Die Kugelumlaufschuhe führen also den Laufwagen auf der Führungsschiene und sorgen dafür, dass ein zum Betrieb des Motors notwendiger Luftspalt zwischen dem Motorprimärteil und dem Motorsekundärteil eingehalten wird. Durch die Verwendung der aus der Führungsschiene und dem Motorsekundärteil gebildeten Baueinheit sowie durch die Verwendung von Kugelumlaufschuhen kann eine wesentlich kompaktere Bauform und somit eine höhere Leistungsdichte der Linearführung erreicht werden, als bei der in der WO 00/16468 beschriebenen Linearführung.

Das Abdeckband kann durch einen Schlitz des Laufwagens hindurchgeführt und an den Längsenden des Führungsgehäuses befestigt sein, wobei zwischen wenigstens einem Ende des Abdeckbandes und dem Führungsgehäuse ein Bandspanner angeordnet ist. Mit dem Bandspanner kann durch eine stufenlose Einstellung der Vorspannung gerade so viel Zugspannung im Abdeckband aufgebracht werden, dass eine Wellenbildung an diesem Stahlband verhindert wird und somit ein vollständiges Aufliegen des Bandes auf den Permanentmagnetstreifen gewährleistet ist. Dadurch wird ein zu starker Verschleiß der Bandumlenkung im Laufwagen vermieden. Der Bandspanner kann in Form einer Zugfeder ausgeführt sein. Durch die mittels der Federkraft aufgebrachte Bandspannung wird ein vollständiges Aufliegen des Abdeckbandes auf dem Führungsgehäuse auch bei Verschleiß der Bandumlenkung im Laufwagen erreicht.

Mit dem Aluminiumstrangpressprofil des Führungsgehäuses, das U-förmig ausgeführt sein kann, wird neben einem großen Widerstandsmoment gegen Biegung auch ein größtmöglicher Schutz gegen äußere Umgebungseinflüsse geschaffen. T-Nuten ermöglichen es, die angetriebene Lineareinheit in vorhandene Konstruktionen einzubinden. Durch die Verwendung des korrosionsarmen Stahlbandes als Abdeckmittel wird der bei Faltenbälgen sich nachteilig auf den Schmutzschutz aufwirkende Pumpeffekt vermieden. Infolge einer glatten Oberfläche des Bandes, im Gegensatz zu einem Faltenbalg, kann sich kein Schmutz anlagern.

### Kurze Beschreibung der Zeichnung

Ein Ausführungsbeispiel der Erfindung ist in der Zeichnung dargestellt und wir im folgenden näher beschrieben. Es zeigen
- Figur 1: eine Linearführung in stirnseitiger Ansicht mit Teilquerschnitten;
- Figur 2: eine Draufsicht auf die Linearführung, jedoch ohne Abdeckband.

### Ausführliche Beschreibung der Zeichnung

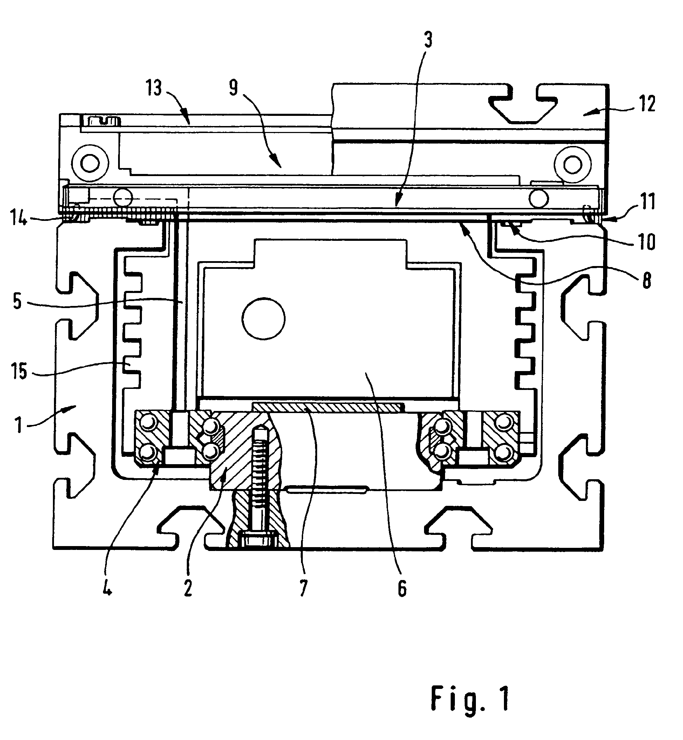

Eine in Figur 1 dargestellte erfindungsgemäße Linearführung besteht aus einem im Querschnitt etwa U-förmigen Führungsgehäuse 1, welches als Aluminiumprofilträger (Aluminiumstrangpressprofil) ausgebildet sein kann. In diesem ist eine Führungsschiene 2 befestigt, an welcher sich ein Laufwagen 3 über Kugeln, die in Kugelumlaufschuhen 4 gehalten sind, abstützt. Mit Hilfe der tragenden Kugeln in diesen Kugelumlaufschuhen 4 ist der Laufwagen 3 längs der Führungsschiene 2 verfahrbar. Zum Befestigen an einer Anschlußkonstruktion weist das Führungsgehäuse 1 eingezogene Nuten auf. Am Laufwagen 3 sind insgesamt vier Kugelumlaufschuhe 4 befestigt, wobei jeder Längsseite der Führungsschiene zwei Kugelumlaufschuhe benachbart sind. Sie werden über Schmierkanäle 5 mit Schmierstoff, vorzugsweise Fett, versorgt. Die Schmierstoffübergabe erfolgt mittels Trichterschmiernippel an beiden Seiten des Laufwagens 3.

Für die Verschiebung des Laufwagens 3 in Längsrichtung des Führungsgehäuses 1 und der darin befestigten Führungsschiene 2 weist die Linearführung einen Elektromotor (Linearmotor) auf, der ein Motorprimärteil 6 und ein Motorsekundärteil 7 enthält. Das Motorprimärteil 6 beinhaltet die vom elektrischen Strom durchflossenen Motorwicklungen. Es ist mit dem Laufwagen 3 verschraubt und bewegt sich mit diesem. Das Motorsekundärteil 7 besteht aus Magneten, die auf der Führungsschiene 2 aufgeklebt sind.

Die Längsöffnung des Führungsgehäuses 1 wird von einem korrosionsarmen stillstehenden Abdeckband 8 verschlossen, welches magnetisierbar ist und daher von einem Magneten angezogen werden kann. Das Abdeckband 8 verläuft durch einen Schlitz 9 hindurch, der in dem Laufwagen 3 angeordnet ist. Hierzu hebt bei der Bewegung des Laufwagens 3 längs der Führungsschiene 2 ein Kopfstück, welches aus Kunststoff besteht und an einer Stirnseite des Laufwagens 3 angeordnet ist, das Abdeckband 8 von dem Führungsgehäuse 1 ab, während an der anderen Stirnseite des Laufwagens 3 ein weiteres Kopfstück das Abdeckband 8 auf das Führungsgehäuse wieder absenkt. Permanentmagnetstreifen 10, welche mit einer selbstklebenden Schicht in hierfür vorgesehenen Nuten des Führungsgehäuses 1 eingeklebt sind, ziehen das Abdeckband 8 an das Führungsgehäuse 1 und halten es dort.

Zusammen mit den Kopfstücken sind an dem Laufwagen 3 Abstreifbürsten 11 stirnseitig befestigt. Sie streifen das Abdeckband 8 ab, bevor es durch den Laufwagen 3 geführt wird. Dadurch wird ein Eindringen größerer Schmutzpartikel in den Innenraum des Führungsgehäuses 1 vermieden.

Der Schlitz 9 des Laufwagens 3, durch den hindurch das Abdeckband 8 verläuft, wird mittels einer mit T-Nuten versehenen Nutenplatte 12 oder eines eingelegten Blechs 13 gebildet, mit welchen der Laufwagen 3 an der Oberseite abgedeckt werden kann. Der Vorteil der Verwendung der Nutenplatte 12 besteht darin, dass die Lagen der Bohrungen für die Befestigung von Anschlusskonstruktionen flexibler gewählt werden können. Durch die Abdeckung des Laufwagens 3 mit dem Blech 13 wird die Laufwagenmasse verringert. Dann kann bei gleicher Motorkraft eine größere Masse der zu bewegenden Anwendungskonstruktion beschleunigt werden.

An beiden Seiten des Laufwagens 3 verhindern Dichtlippen 14 den Eintritt von Schmutz und Staub in den Innenraum des Führungsgehäuses 1. Sie beugen einer Beeinträchtigung von Führung, Motor und evtl. verwendetem Meßsystem vor.

Für die Abführung von Wärme, die als Verlustleistung des Motors entsteht, sind am Laufwagen 3 im Bereich der Aufnahme des Motorprimärteils 6 Kühlrippen 15 ausgebildet.

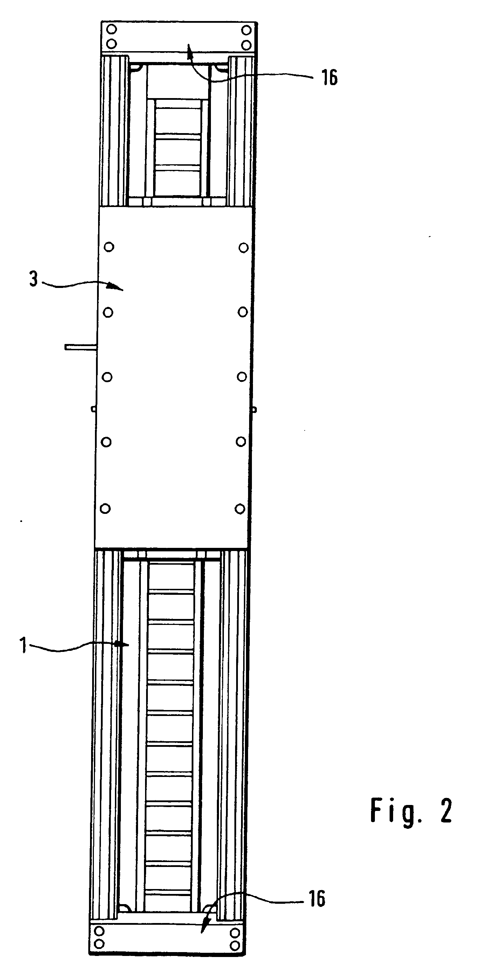

Um eine Wellenbildung an dem Abdeckband 8 bzw. dessen partielles Abheben von den am Führungsgehäuse 1 befestigten Permanentmagnetstreifen 10 zu verhindern, sind in der Linearführung Bandspanner 16 angeordnet. Diese stellen die Verbindung des Abdeckbandes 8 mit dem Führungsgehäuse 1 her und halten das Abdeckband 8 unter leichter Zugspannung. Wie Figur 2 zeigt, befinden sich die Bandspanner 16 an den stirnseitigen Enden des Führungsgehäuses 1. Ohne die Bandspanner 16 könnte eine Wellenbildung in dem Abdeckband 8 durch Verschleiß der Bauteile für die Bandumlenkung im Laufwagen 3 hervorgerufen werden. Die Vorspannung des Abdeckbandes 8 kann nach dessen Einbau mit den Bandspannern 16 eingestellt werden.

### Bezugszahlenliste

- 1: Führungsgehäuse
- 2: Führungsschiene
- 3: Laufwagen
- 4: Kugelumlaufschuh
- 5: Schmierkanal
- 6: Motorprimärteil
- 7: Motorsekundärteil
- 8: Abdeckband
- 9: Schlitz
- 10: Permanentmagnetstreifen
- 11: Abstreifbürste
- 12: Nutenplatte
- 13: Blech
- 14: Dichtlippe
- 15: Kühlrippe
- 16: Bandspanner

## Patentansprüche

1. Linearführung mit einem als Profilträger ausgebildeten Führungsgehäuse (1), welches ein Strangpressprofilteil aus Aluminium ist, und einer darin befestigten Führungsschiene (2), an welcher ein Laufwagen (3) über Wälzkörper längsverschieblich abgestützt ist, der sich durch eine Längsöffnung des Führungsgehäuses (1) hindurch erstreckt und sich teilweise außerhalb des Führungsgehäuses (1) befindet, wobei die Linearführung innerhalb des Führungsgehäuses (1) einen Antrieb für die Längsverschiebung des Laufwagens (3) aufweist, der als Elektromotor mit einem in dem Führungsgehäuse (1) angeordneten Motorteil und einem in dem Laufwagen (3) angeordneten Motorteil ausgebildet ist, und die Längsöffnung durch ein Abdeckband (8) aus nichtrostendem magnetischen Stahl verschlossen ist, für welches Permanentmagnetstreifen (10) in Nuten des Führungsgehäuses (1) eingebracht sind, wobei das in dem Laufwagen (3) angeordnete Teil des Elektromotors ein Motorprimärteil (6) ist, welches vom elektrischen Strom durchflossene Motorwicklungen beinhaltet, und das in dem Führungsgehäuse (1) angeordnete Teil ein Motorsekundärteil (7) ist, welches aus Magneten besteht, **dadurch gekennzeichnet, dass** das Motorsekundärteil (7) an der Führungsschiene (2) unmittelbar befestigt ist.

2. Linearführung nach Anspruch 1, **dadurch gekennzeichnet, dass** die Wälzkörper, über welche der Laufwagen (3) an der Führungsschiene (2) längsverschieblich abgestützt ist, in mehreren endlosen Umläufen angeordnet sind, wobei jeder Umlauf eine tragende Wälzkörperreihe, eine rücklaufende Wälzkörperreihe und zwei diese Reihen miteinander verbindende Wälzkörperumlenkbögen enthält.

3. Linearführung nach Anspruch 2, **dadurch gekennzeichnet, dass** die Wälzkörper Kugeln sind, welche in an dem Laufwagen (3) befestigten Kugelumlaufschuhen (4) geführt sind.

4. Linearführung nach Anspruch 3, **dadurch gekennzeichnet, dass** von den Umläufen jeweils die Kugeln der tragenden Reihen an den beiden in Längsrichtung verlaufenden Seitenflächen der Führungsschiene (1) abgestützt sind.

5. Linearführung nach Anspruch 1, **dadurch gekennzeichnet, dass** das Abdeckband (8) durch einen Schlitz (9) des Laufwagens (3) hindurchgeführt und an den Längsenden des Führungsgehäuses (1) befestigt ist, wobei zwischen wenigstens einem Ende des Abdeckbandes (8) und dem Führungsgehäuse (1) ein Bandspanner (16) angeordnet ist.

6. Linearführung nach Anspruch 5, **dadurch gekennzeichnet, dass** der Bandspanner (16) in der Form einer Zugfeder ausgeführt ist.

## Claims

1. Linear guide having a guide housing (1) which is embodied as a profile carrier and is an extruded press profile part made of aluminium, and a guide rail (2) which is attached therein and on which a carriage (3) is supported in a longitudinally displaceable fashion by means of roller bodies, which carriage (3) extends through a longitudinal opening in the guide housing (1) and is located partially outside the guide housing (1), wherein the linear guide has, inside the guide housing (1), a drive for the longitudinal displacement of the carriage (3) which is embodied as an electric motor with a motor part which is arranged in the guide housing (1) and a motor part which is arranged in the carriage (3), and the longitudinal opening is closed off by a cover strip (8) made of stainless magnetic steel, for which permanent magnetic strips (10) are formed in grooves in the guide housing (1), wherein the part of the electric motor which is arranged in the carriage (3) is a motor primary (6) which contains motor windings through which electric current flows, and the part which is arranged in the guide housing (1) is a motor secondary (7) which is composed of magnets, **characterized in that** the motor secondary (7) is directly attached to the guide rail (2).

2. Linear guide according to Claim 1, **characterized in that** the roller bodies, by means of which the carriage (3) is supported in a longitudinally displaceable fashion on the guide rail (2), are arranged in a plurality of infinite circuits, wherein each circuit contains a load-bearing row of roller bodies, a returning row of roller bodies and two deflection arcs of roller bodies which connect these rows to one another.

3. Linear guide according to Claim 2, **characterized in that** the roller bodies are balls which are guided in ball circulation shoes (4) which are attached to the carriage (3).

4. Linear guide according to Claim 3, **characterized in that** the circuits respectively support the balls of the load-bearing rows on the two side faces of the guide rail (1) which run in the longitudinal direction.

5. Linear guide according to Claim 1, **characterized in that** the cover strip (8) extends through a slit (9) in the carriage (3) and is attached to the longitudinal ends of the guide housing (1), wherein a strip tensioner (16) is arranged between at least one end of the cover strip (8) and the guide housing (1).

6. Linear guide according to Claim 5, **characterized in that** the strip tensioner (16) is embodied in the form of a tension spring.

## Revendications

1. Guide linéaire comprenant un boîtier de guidage (1) réalisé sous forme de support profilé, qui est une pièce profilée filée en aluminium, et un rail de guidage (2) fixé dans celui-ci, sur lequel un chariot (3) est supporté par le biais de corps de roulement de manière déplaçable longitudinalement, lequel s'étend à travers une ouverture longitudinale du boîtier de guidage (1) et se trouve en partie en dehors du boîtier de guidage (1), le guide linéaire présentant, à l'intérieur du boîtier de guidage (1), un entraînement pour le déplacement longitudinal du chariot (3), qui est réalisé sous forme de moteur électrique avec une partie moteur disposée dans le boîtier de guidage (1) et une partie moteur disposée dans le chariot (3), et l'ouverture longitudinale étant fermée par une bande de recouvrement (8) en acier magnétique inoxydable, pour laquelle des rubans à aimantation permanente (10) sont introduits dans des rainures du boîtier de guidage (1), la partie du moteur électrique disposée dans le chariot (3) étant une partie primaire de moteur (6), qui contient des enroulements de moteur parcourus par un courant électrique, et la partie disposée dans le boîtier de guidage (1) étant une partie secondaire de moteur (7) qui se compose d'aimants, **caractérisé en ce que** la partie secondaire de moteur (7) est fixée directement au rail de guidage (2).

2. Guide linéaire selon la revendication 1, **caractérisé en ce que** les corps de roulement par le biais desquels le chariot (3) est supporté de manière déplaçable longitudinalement sur le rail de guidage (2), sont disposés dans plusieurs circonférences sans fin, chaque circonférence contenant une rangée de corps de roulement portante, une rangée de corps de roulement de retour et deux courbes de déviation de corps de roulement reliant l'une à l'autre ces deux rangées.

3. Guide linéaire selon la revendication 2, **caractérisé en ce que** les corps de roulement sont des billes, qui sont guidées dans des sabots à billes (4) fixés sur le chariot (3).

4. Guide linéaire selon la revendication 3, **caractérisé en ce que** sur les circonférences, les billes des rangées portantes sont supportées à chaque fois sur les deux surfaces latérales, s'étendant dans la direction longitudinale, du rail de guidage (1).

5. Guide linéaire selon la revendication 1, **caractérisé en ce que** la bande de recouvrement (8) est guidée à travers une fente (9) du chariot (3), et est fixée aux extrémités longitudinales du boîtier de guidage (1), un dispositif de tensionnement de bande (16) étant disposé entre au moins une extrémité de la bande de recouvrement (8) et le boîtier de guidage (1).

6. Guide linéaire selon la revendication 5, **caractérisé en ce que** le dispositif de tensionnement de bande (16) est réalisé sous forme de ressort de traction.
